Europäisches Patentamt

European Patent Office

Office européen des brevets

(11) Publication number: **0 249 923**
**B1**

## (12) EUROPEAN PATENT SPECIFICATION

(45) Date of publication of patent specification: **24.10.90**

(51) Int. Cl.⁵: **G 01 M 11/00, G 01 L 1/24**

(21) Application number: **87108611.2**

(22) Date of filing: **15.06.87**

(54) Method of and apparatus for measuring polarization beat-length in highly-birefringent single-mode optical fibres.

<table>
<tr><td>

(30) Priority: **17.06.86 IT 6749686**

(43) Date of publication of application:
**23.12.87 Bulletin 87/52**

(45) Publication of the grant of the patent:
**24.10.90 Bulletin 90/43**

(84) Designated Contracting States:
**DE FR GB NL SE**

(56) References cited:
**EP-A-0 120 999**
**EP-A-0 190 922**
**FR-A-2 547 049**
**GB-A-2 125 572**
**GB-A-2 165 118**

APPLIED OPTICS, vol. 22, no. 11, June 1983,
pages 1748-1753, New York, US; T.
KATSUYAMA et al.: "Propagation
characteristics of single polarization fibers"

</td><td>

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Calvani Riccardo**
**Strada Chieri 30/1**
**Pino Torinese (Torino) (IT)**
Inventor: **Coppa Gianni**
**Via Camerana 4**
**Torino (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

(56) References cited:
APPLIED OPTICS, vol. 24, no. 24, 15th December
1985, pages 4387-4391; K. TAKADA et al.:
"Precision measurement of modal birefringence
of highly birefringent fibers by periodic lateral
force"

</td></tr>
</table>

Courier Press, Leamington Spa, England.

## Description

The present invention concerns optical fibre characterization methods, and more particularly it refers to a method of and an apparatus for measuring polarization beat-length in highly-birefringent single-mode optical-fibres.

An optical fibre is known to exhibit a birefringence due to the refractive-index difference along two orthogonal axes (fibre birefringence axes). This difference arises from both the practical impossibility of manufacturing a perfectly circular fibre and from imperfections caused by the manufacturing process.

Birefringence causes a variation in the state of polarization of a radiation propagating along the fibre. Such a phenomeon is characterized by a well-defined periodicity. The distance between two subsequent points of the fibre where the propagating radiation presents the same state of polarization is called beat-length, and it is the distance at which the difference of phase $\phi_{x,y}$ between the components, along the two birefringence axes, of the electrical field associated with the radiation, has a value $2\pi$.

As known, such a phase difference depends on the difference between the refractive indices along the two axes according to relation

$$\phi_{x,y} = \frac{2\pi}{\lambda}(n_x - n_y)Z \qquad (1)$$

where $\lambda$ is the radiation wavelength, Z is the distance covered within the fibre and $n_x$, $n_y$ are the two refractive indices.

Polarization maintenance is fundamental when using single-mode optical fibres as sensors. Highly-birefringent fibres are used in these applications, which fibres are obtained by imposing the birefringence during manufacturing: a strong anisotropy derives from non-circular core shape and/or from permanent mechanical stresses induced on the core itself. Such fibres have a beat-length of the order of some millimetres. Accurate knowledge of beat-length is indispensable to correctly dimension fibre lengths to be used in such applications.

In a paper Applied Optics, Vol. 22, No. 11, June 1983, pages 1748—1753, Katsuyama et. al., "Propagation Characteristics of Single Polarization Fibres", the polarization characteristics of a polarization maintaining fibre is investigated, considering the beat-length limit below which the fibre maintains polarization. The limit value is determined by investigating mode coupling induced in the fibre due to a constant stress. The document then discusses how to obtain beat-lengths lower than the limit when manufacturing a fibre, but does not teach how to measure the actual beat-length in an existing fibre. Thus, the demand for such measurement can not be satisfied therefrom.

FR—A 2547049, further, discloses an optical transducer, in particular for the remote monitoring of a force. To this end the transducer comprises two optical fibres and exploits the changes in polarization introduced in the radiation passing in one of the fibres by a force whose direction rotates in a plane perpendicular to the fibre axis. The system measures a remote state of polarization by a radiometric type system, but in no way it suggests the measurement of beat-length.

Another prior art system, known from EP—A—120999, also concerns a force sensor, in which the force intensity is determined from the changes in the state of polarization at a fibre point. The characteristics of the fibre can not be determined thereby.

Also, various methods for measuring polarization beat-length in highly-birefringent optical fibres are known. For instance, the paper "Precision measurement of modal birefringence of highly-birefringent fibres by periodic lateral force" by K. Takada, J. Noda and R. Ulrich, Applied Optics, Vol. 24, No. 24, 15 December 1985, pages 4387 ff., describes a method where a transverse force is applied to the fibre according to one of the birefringence axes, such a force is modulated at audio frequency by a loudspeaker, the force application point and the modulating means are displaced along the fibre and the ratio between the components along the two birefringence axes, of the intensity of a radiation launched into the fibre is measured. The beat-length is the length after which such a ratio recovers the same value.

This method presents a number of disadvantages:

—measurement conditions are to be such that only one of the fundamental modes is excited and coupling coefficient of the two modes is to be very small; being the signal to be measured proportional to such a coefficient, noises of even low intensity can seriously affect the measurement precision;

—fibre birefringence axes are to be previously identified, what lengthens measurement time;

—the presence, in a same device displaceable along the fibre, of means which apply a force to modify the state of polarization and of means which periodically modify such a force to generate a reference for the measurement instruments makes it difficult to accurately control force intensity and direction, and this also is detrimental to measurement precision.

The disadvantages above are overcome by the method and apparatus of the present invention, which: make an interferometric polarization analysis instead of a radiometric one, and hence do not present problems due to low signal level; apply a force which is constant and hence easy to control in direction and intensity; do not require a previous determination of fibre birefringence axes.

The present invention provides a method of measuring beat-length in highly-birefringent single-mode fibres, where a polarized radiation is launched into the fibre, a force is applied to the fibre perpendicularly to the fibre axis, the point of application of the force is displaced along the fibre and lastly the beat value is obtained by measurements on the signal outgoing from the fibre. The method is characterized in that a constant-intensity force is applied to the fibre, the polarization of the output signal is analyzed through an interferometric technique and the beat-length is derived from the values, as a function of the force application point, of the ratio (R(Z)) between the amplitudes of the components, along the two birefringence axes, of the electric field associated with the radiation launched into the fibre, and of the relative phase ($\phi_{x,y}(Z)$) between the two components: beat-length is represented by the period of the function which expresses the ratio of said amplitudes versus the displacement of the force application point and by the distance between the two points where the relative phases varies by $2\pi$, respectively.

The apparatus according to the invention comprises a source of polarized radiation, stressing means for exerting onto the fibre a force whose application point is displaced along the fibre axis, and means for analyzing the fibre output signal, and is characterized in that the stressing means apply a constant force on the fibre and the output-signal analyzing means comprise an interferometric polarimeter associated with computing means apt to obtain the beat-length value from both the ratio between the amplitudes of the components, along two axes of birefringence of the fibre, of the electrical field associated with the radiation launched into the fibre, and from the relative phase of the two components.

The invention will now be described with reference to the annexed drawing, wherein:

—Figure 1 is a schematic representation of the measuring apparatus;

—Figure 2 is a perspective view of a possible example of the means applying the force to the fibre and displacing the force application point;

—Figure 3 shows the amplitude ratio and the phase difference between the two electrical-field components versus the displacement of the force application point; and

—Figure 4 is a partial view of a variant of the apparatus.

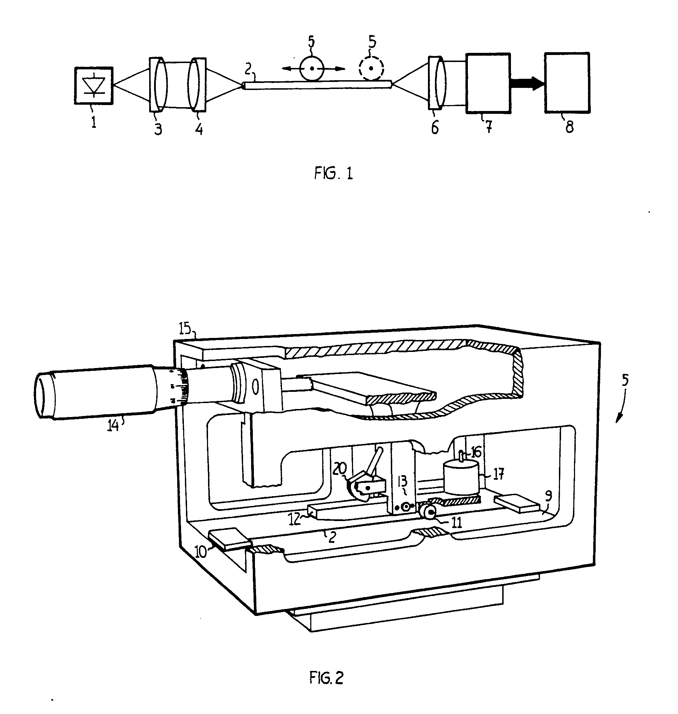

In Figure 1, the apparatus comprises a quasi-monochromatic light source 1, e.g. a semiconductor laser. The radiation emitted is collimated and focused on the input face of fibre 2 under test, through a suitable optical system schematized by lenses 3, 4. The fibre, as mentioned, is a highly-birefringent (or polarization-maintaining) single-mode fibre, i.e. a fibre with short beat-length (a few millimeters). The fibre length used for the measurement must be such that propagation time difference between the two modes is less than source coherent time.

A mechanical stressing device, schematized by roller 5, applies a constant force on a fibre zone whose linear size, along the fibre axis, is very small if compared to beat-length (e.g. of the order of 1/100), and displaces the force application point along the fibre axis. This system will be described in detail with reference to Figure 2.

The light outgoing from fibre 2 is sent, through a suitable optical system schematized by lens 6, to a polarimeter 7 supplying the values of phase difference $\phi$ and ratio R between the amplitudes Ex, Ey of the two components, along the two birefringence axes, of the electrical field associated with the radiation launched into the fibre. Advantageously, polarimeter 7 is an interferometric polarimeter, e.g. of the type described by R. Calvani, R. Caponi, F. Cisternino in the paper entitled: "A fast heterodyne interferometer for real-time fibre polarimetry", presented at IOOC-ECOC '85, Venice, 1—4 October 1985.

A computing device 8 obtains the values of beat length $L_B$ from both the amplitude ratio and the relative phase, as will be described hereinafter.

A possible embodiment of the means applying a force on the fibre and displacing the application point is shown in Figure 2.

A base plate 9 has a V-shaped groove housing fibre 2 and having such a depth as to let nearly half the fibre jut out.

A roller 11 with horizontal axis perpendicular to the fibre axis can roll over fibre 2. Roller 11 is carried by a lever 12 pivotally mounted on a frame 13, which can be displaced step by step along base plate 9 in a controlled way, e.g. upon command of a micrometric screw 14 carried by a plate 15 integral with base 9. To simplify the drawing, the means allowing the control of the linearity of displacement of frame 13 is not shown.

Lever 12 is equipped with means, represented by pin 16, for mounting a predetermined weight 17 which is to cause deformation and hence birefringence variation of fibre 2. A cam member 20 allows lever 12 to be raised, even when loaded, for the insertion of fibre 2.

The relative positions of pin 16, of the axis of roller 11 and of the pivotal axis of lever 12 are advantageously chosen so that the force applied by roller 11 on the fibre is a multiple of the weight applied to the lever, e.g. triple. In this way a fibre deformation, and hence a birefringence variation, of desired magnitude can be obtained without using considerable weights.

Roller diameter is chosen so that the deformation affects a zone of fibre 2 whose size along the fibre axis is negligible with respect to beat-length; e.g., if the roller diameter is about 1 cm, an elliptical deformation is obtained whose major axis is about 40 μm and hence is actually negligible with respect to beat-length (a few millimeters). Since such size determines the minimum distance between two subsequent measurement points, it is clear that the invention affords a very high resolution.

The operation of the above-described device is immediately deduced from what procedes. The frame is initially moved to one end of its run, e.g. to the left end with reference to the drawing. Then, a predetermined weight is placed on pin 16 and the frame is advanced along the fibre by steps of the above-mentioned order of magnitude. The values of ratio R between amplitudes Ex, Ey of the field components and of phase difference φ supplied by polarimeter 7 at each step are stored in computing device 8. At a given fibre point of abscissa Z, for a force inducing in the fibre a birefringence effect resulting in a phase difference K between the two components, values R and φ and given by relations

$$R(Z) = \frac{1 - \sin K \sin \delta\beta Z}{1 + \sin K \sin \delta\beta Z} \qquad (2)$$

$$\phi(Z) = \text{arctg} (\cos K \, \text{tg} \, \delta\beta Z) + \delta\beta(L-Z) \qquad (3)$$

where
L=fibre length
$\delta = 2\pi (n_x - n_y)$
In the particulate case of K=π/2, the above relations become

$$R(Z) = \frac{1 - \sin \delta\beta Z}{1 + \sin \delta\beta Z} \qquad (4)$$

$$\phi(Z) = \delta\beta(L-Z) \qquad (5)$$

At the end of the run of roller 11 on the fibre, computing system 8 can calculate value $L_B$, which is given by the period of R and respectively by the distance between two points of abscissae z1, z2 where the values φ(z1), φ(z2) of φ are such that φ(z1)−φ(z2)=2π. If the fibre length submitted to transverse stress is of the order of a few centimeters (and length $L_B$ of the order of the millimeter), it will comprise a high number of beat-lengths and the value of $L_B$ supplied by computing system 8 will be an average of the measured values. This allows compensation of possible local inhomogeneties in fibre cladding.

If desired, to compensate also possible systematical errors of measurement instruments and mechanical defects, the measurement can be repeated from right to left or with different weights, and a mean value between the obtained values will be calculated again.

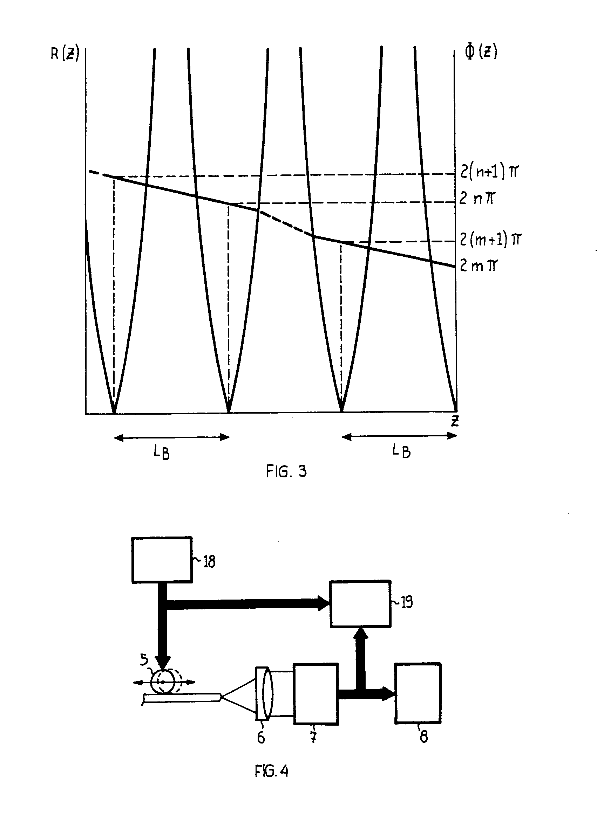

Figure 3 shows R and φ versus Z, in the particular case of K=π/2.

Obtaining $L_B$ from two different quantities such as phase and amplitude ensures a greater noise immunity, since noises affecting the phase do not affect the field amplitude and vice versa; in addition, an interferometric polarimeter is a highly precise instrument in se. The structure described for the stressing device ensures a simple and accurate control of both the intensity and the direction of the applied force: in fact, an accurate construction of groove 10 ensures the complanarity between the fibre axis and the groove edge and, in turn, the means controlling the displacement of the roller allow the force to be always kept exactly perpendicular to the axis.

Furthermore, the force needs not to be exerted according to one birefringence axis of the fibre and hence the previous detection of said axes is also unnecessary. Finally, interferometric measurement of the fields and not of the intensity presents all the advantages described for the polarimeter in the above-cited paper.

It is evident that variations and modifications are possible without going out of the scope of the invention. More particularly, the apparatus is easy to be automated, since frame 13 can be driven by a motor controlled by computing system 8 so as to cause the displacements corresponding to the desired measurement step.

Lastly, a solution allowing real-time beat-length measurement can be envisaged. This solution is shown in Figure 4: mechanical system 5 (and more particularly frame 13, Figure 2) is connected with a reciprocating motor controlled by a linear-ramp periodical signal, with slow rise and fast decay, generated by a ramp generator 18.

Frame 13 moves slowly forward during rise time of the waveform, whereas it moves back quickly to the starting position during decay. In addition the forward stroke of frame 13 is to be greater than beat-length to allow measurement repetition within a period of the applied signal.

The use of an oscilloscope 19 operating in x-y mode with channel x connected with ramp generator and channel y connected to outputs R or of polarimeter 7, allows real-time observation of waveforms R(Z) and φ(Z) shown in Figure 3 and, upon suitable calibration, definition of length $L_B$.

**Claims**

1. A method of measuring polarization beat-length in a highly-birefringent single-mode optical-fibre, wherein a polarized radiation is sent into the fibre, a force perpendicular to the fibre axis is applied to the fibre so as to modify its state of polarization, the force application point is displaced along the fibre axis, and the beat-length is obtained from an analysis of the signal outgoing from the fibre, characterized in that a constant intensity force is applied to the fibre, the polarization of the outgoing signal is analyzed through an interferometric technique, and the beat-length is obtained, as the force application point varies, from the values of the ratio (R(Z)) between the values of the components, along the two birefringence axes, of the electrical field associated with the radiation launched into the fibre and of the relative phase (φ(Z)) between said two components, such length being represented respectively by the period of the function expressing said amplitude ratio versus the force application point displacement and by the distance between two points wherein said relative phase varies by 2π.

2. A device for measuring polarization beat-length in a highly-birefringent single-mode optical-fibre (2), comprising a source (1) of polarized radiation, an optical system (3, 4) to couple such radiation to the fibre (2), means (5) for exerting a force perpendicularly to the axis of fibre (2) and for displacing the force application point along the fibre axis, and measuring (7) and computing (8) means for obtaining beat-length value from the signal outgoing from the fibre (2), characterized in that the force exerting means (5) are arranged to exert a constant intensity force, and the measuring means (7) comprise an interferometric polarimeter (7) which supplies the values of the ratio between the amplitudes of the components along the two fibre birefringence axes, of the electrical field associated with the radiation launched into the fibre, and the values of the relative phase of these components.

3. A device according to claim 2, characterized in that the computing means (8) obtains the beat-length as the period of the function expressing said ratio versus the displacement of the force-exerting means (5) and respectively as the distance between two points at which the relative phase differs by $2\pi$.

4. A device according to claim 2 or 3, characterized in that the means (5) exerting the force on the fibre comprise a roller (11) with horizontal axis, perpendicular to the fibre axis, mounted on a lever (12) and rotatable around its axis, which roller is held in contact with the fibre by a weight (17) carried by the lever (12), which is pivoted on a frame (13) displaceable in controlled manner.

5. A device according to claim 4, characterized in that the controlled displacement of frame (13) is obtained by a motor slaved to the computing means (8) and causing a step-by-step displacement of the frame along the fibre.

6. A device according to claim 4, characterized in that the controlled displacement of the frame (13) is obtained by a reciprocating motor controlled by a generator (18) of a slowly rising, fast decaying linear-ramp periodical signal, the frame moving from a starting position during the ramp rise time and coming back to that position during ramp decay.

7. A device according to claim 6, characterized in that it comprises an oscilloscope (19) operating in x-y mode, the ramp signal and the signals outgoing from the polarimeter (7) being applied to the x-axis and to the y-axis, respectively.

**Patentansprüche**

1. Verfahren zur Messung der Polarisations-Schwebungslänge in einer hoch-doppelbrechenden Monomode-Lichtleitfaser, bei dem man eine polarisierte Strahlung in die Faser leitet, auf die Faser eine senkrecht zur Faserachse verlaufende Kraft zur Modifizierung ihres Polarisationszustands aufbringt, den Kraftaufbringungspunkt entlang der Faserachse verschiebt und aus einer Analyse des die Faser verlassenden Signals die Schwebungslänge ermittelt, dadurch gekennzeichnet, daß man auf die Faser eine Kraft konstanter Höhe aufbringt, vom abgehenden Signal die Polarisation durch eine interferometrische Technik analysiert und bei der Änderung des Kraftaufbringungspunkts die Schwebungslänge aus den Werten des Verhältnisses (R(Z)) zwischen den Werten der Komponenten des der in die Faser geleiteten Strahlung zugeordneten elektrischen Felds entlang den beiden Doppelbrechungsachsen und aus der relativen Phase ($\phi(Z)$) zwischen diesen Komponenten ermittelt, wobei die Schwebungslänge gegeben ist durch die Periode der Funktion, die das Amplitudenverhältnis in Abhängigkeit von der Verschiebung des Kraftaufbringungspunkts ausdrückt, bzw. durch den Abstand zwischen zwei Punkten, zwischen denen die relative Phase um $2\pi$ unterschiedlich ist.

2. Vorrichtung zur Messung der Polarisations-Schwebungslänge in einer hoch-doppelbrechenden Monomode-Lichtleitfaser (2), mit einer Quelle (1) polarisierter Strahlung, einem optischen System (3, 4) zum Koppeln dieser Strahlung in die Faser (2), Einrichtungen (5) zum Aufbringen einer im rechten Winkel zur Faserachse stehenden Kraft und zum örtlichen Verändern des Kraftaufbringungspunkts entlang der Faserachse, und Meßeinrichtungen (7) sowie Recheneinrichtungen (8) zum Ermitteln des Schwebungslängenwerts aus dem aus der Faser (2) austretenden Signal, dadurch gekennzeichnet, daß die die Kraft aufbringenden Einrichtungen (5) zum Ausüben einer Kraft konstanter Höhe angeordnet sind und die Meßeinrichtungen (7) ein interferometrisches Polarimeter (7) umfassen, das die Werte des Verhältnisses zwischen dem Amplituden der Komponenten entlang den beiden Faser-Doppelbrechungsachsen des der in die Faser eingeleiteten Strahlung zugeordneten elektrischen Felds sowie die Werte der relativen Phase dieser Komponenten liefert.

3. Vorrichtung nach Anspruch 2, dadurch gekennzeichnet, daß die Recheneinrichtungen (8) die Schwebungslänge als die Periode der dieses Verhältnis gegen die Ortsveränderung der die Kraft aufbringenden Einrichtungen (5) ausdrükkenden Funktion bzw. als den Abstand zwischen den beiden Punkten, bei denen die relative Phase sich um $2\pi$ unterscheidet, ermitteln.

4. Vorrichtung nach Anspruch 2 oder 3, dadurch gekennzeichnet, daß die die Kraft auf die Faser aufbringenden Einrichtungen (5) eine Rolle (11) mit horizontaler Achse, die rechtwinklig zur Faserachse verläuft, sind, wobei diese Rolle auf einem Hebel (12) montiert ist, um ihre Achse drehbar ist und durch ein Gewicht (17), das vom Hebel (12) getragen wird, welcher seinerseits verdrehbar auf einem gesteuert verschiebbaren Rahmen (13) gehaltert ist, in Kontakt mit der Faser gehalten wird.

5. Vorrichtung nach Anspruch 4, dadurch gekennzeichnet, daß die gesteuerte Verschiebung des Rahmens (13) durch einen von den Recheneinrichtungen (8) beherrschten, eine schrittweise Verlagerung des Rahmens entlang der Faser bewirkenden Motor erhalten wird.

6. Vorrichtung nach Anspruch 4, dadurch gekennzeichnet, daß die gesteuerte Ortsveränderung des Rahmens (13) durch einen reziprokierenden Motor erhalten wird, der von einem Generator (18) eines periodischen langsam ansteigenden, schnell abfallenden linearen Rampensignals gesteuert wird, wobei sich der Rahmen während der Rampenanstiegszeit von einer Startstellung aus bewegt und während der Rampenabfallzeit in diese Startstellung zurückkehrt.

7. Vorrichtung nach Anspruch 6, dadurch gekennzeichnet, daß sie ein im x-y-Modus arbeitendes Oszilloskop (19) umfaßt, an dessen x-Achse und y-Achse das Rampensignal bzw. das vom Polarimeter (7) gelieferte Signal gegeben werden.

**Revendications**

1. Méthode pour mesurer la longueur de battement de la polarisation dans une fibre optique monomode hautement biréfringente, où l'on envoie dans la fibre un rayonnement polarisé, on soumet la fibre à l'action d'une force perpendiculaire à l'axe de la fibre de façon à en modifier l'état de polarisation, on déplace le point d'application de la force le long de l'axe de la fibre, et l'on obtient la longueur de battement de la polarisation à l'aide d'une analyse du signal sortant de la fibre, caractérisée en ce qu'on applique à la fibre une force d'intensité constante, on analyse la polarisation du signal de sortie par une technique interférométrique, et l'on obtient la longueur de battement, lorsque le point d'application de la force varie, à partir des valeurs du rapport $(R(Z))$ entre les valeurs des composantes, selon les deux axes de biréfringence, du champ électrique associé au rayonnement envoyé dans la fibre, et des valeurs de la phase relative $(\phi(Z))$ desdites deux composantes, cette longueur étant représentée respectivement par la période de la fonction qui donne le rapport d'amplitudes comme fonction du déplacement du point d'application de la force et par la distance entre deux points où la phase relative change de $2\pi$.

2. Dispositif pour mesurer la longueur de battement de la polarisation dans une fibre optique monomode (2) hautement biréfrigente, comprenent une source (1) d'un rayonnement polarisé, un système optique (3, 4) pour envoyer ce rayonnement dans la fibre (2), des moyens (5) pour exercer une force perpendiculaire à l'axe de la fibre (2) et pour déplacer le point d'application de la force le long de l'axe de la fibre, et des moyens de mesure (7) et de calcul (8) pour obtenir la valeur de la longueur de battement à partir du signal sortant de la fibre (2), caractérisé en ce que les moyens (5) pour exercer la force sont disposés de façon à exercer une force d'intensité costante, et les moyens de mesure (7) comprennent un polarimètre interférométrique (7) qui fournit les valeurs du rapport entre les amplitudes des composantes, selon les deux axes de biréfringence de la fibre, du champ électrique associé au rayonnement envoyé dans la fibre, et les valeurs de la phase relative de ces composantes.

3. Dispositif selon la revendication 2, caractérisé en ce que les moyens de calcul (8) obtiennent la longueur de battement comme la période de la fonction qui donne le rapport d'amplitudes en fonction du déplacement des moyens (5) qui exercent la force et respectivement comme la distance entre deux points où la phase relative diffère de $2\pi$.

4. Dispositif selon la revendication 2 ou 3, caractérisé en ce que les moyens (5) qui exercent la force sur la fibre comprennent un galet (11) ayant un axe horizontal et perpendiculaire à l'axe de la fibre, qui est monté sur un levier (12) de façon à tourner autour de son axe et qui est maintenu en contact de la fibre par un poids (17) porté par le levier (12), qui pivote sur un bâti (13) qu'on peut déplacer de façon contrôlée.

5. Dispositif selon la revendication 4, caractérisé en ce que le déplacement contrôlé du bâti (13) est obtenu à l'aide d'un moteur qui est asservi au moyens de calcul (8) et qui fait déplacer pas à pas le bâti le long de la fibre.

6. Dispositif selon la revendication 4, caractérisé en ce que le déplacement contrôlé du bâti (13) est obtenu à l'aide d'un moteur alternatif commandé par un générateur (18) d'un signal périodique en dents de scie avec montée lente et déscente rapide, le bâti se déplaçant à partir d'une position initiale pendant le tamps de montée d'une dent et revenant à cette position pendant la descente de la dent.

7. Dispositif selon la revendication 6, caractérisé en ce qu'il comprend un oscilloscope (19) travaillant dans le mode x-y, le signal en dents de scie et les signaux de sortie du polarimètre (7) étant appliqués à l'axe x et à l'axe y, respectivement.

FIG. 1

FIG. 2

FIG. 3

FIG. 4